# EUROPEAN PATENT APPLICATION

(11) **EP 3 761 653 A1**
(43) Date of publication of application: **06.01.2021**
(21) Application number: 20183598.0
(22) Date of filing: 02.07.2020
(51) Int. Cl.: H04N 21/436, H04N 21/43, G10L 15/22

(54) **PLAYING CONTROL METHOD AND APPARATUS FOR DEVICE GROUP, AND PLAYING SYSTEM**

(30) Priority: 02.07.2019 CN 201910589975
(71) Applicant: Beijing Xiaoniao Tingting Technology Co., Ltd, 100191 Beijing (CN)
(72) Inventor: LIU, Song, BEIJING, 100191 (CN); LOU, Xiaolei, BEIJING, 100191 (CN); LI, Sai, BEIJING, 100191 (CN)
(74) Representative: Lavoix

(57) **Abstract**

The disclosure discloses a playing control method and apparatus for a device group, and a playing system. The method of the disclosure includes that: a master device and one or more slave devices are determined from multiple playing devices (S110), the multiple playing devices form a device group, a network connection is established between the master device and a server side; an intra-group connection relationship is established between the master device and the one or more slave devices (S 120); in response to acquisition of user data, the one or more slave devices transmit the user data to the master device based on the intra-group connection relationship, and the master device interacts with the server side based on the user data (S130).

## Description

### TECHNICAL FIELD

The disclosure relates to a playing/playback control method and apparatus for a device group, and a playing system.

### BACKGROUND

At present, all kinds of intelligent human-computer interaction devices, especially intelligent speakers, have entered thousands of households. Their use scenarios are not limited to the occasion where a single intelligent speaker plays, and multiple intelligent speakers form a group through the internet to realize synchronous playing. When multiple smart player devices form a group to play, usually only one of the devices can respond to voice calls and interactions, and the whole group behaves in a uniform manner. In use, it is expected that no matter which device a user interacts with, the results will be the same. That is, the whole playing group reflects the same context information via different devices. For example, the user says "Play a song" to a speaker A, then asks "What song is currently playing?", the speaker A will answer "The song currently playing is XXX". If the user says to a speaker B "What song is currently playing?", its answer is also "The song currently playing is XXX".

At present, the usual practice of keeping the context information of the speakers consistent is that a background server uniformly processes requests from different speakers. Because the background server maintains and manages group forming information of the local speakers, it can clearly identify that this is the operation of the same group composed of multiple speakers under the same account, such that the same response results for inquiring requests from different speakers can be obtained.

The current background-based implementation mode has the following disadvantages.
1. There is a great dependence on a device login account. When a group is formed, the same account must be logged into, so the use portability is limited, and multiple devices of different accounts cannot easily form a group or cannot achieve the consistency of overall response of the playing group.
2. There is a great dependence on background processing. The background without a multi-device group management function cannot implement this function. For example, multiple smart playing devices form a group locally, and at the same time, these smart playing devices are separately coupled with the background server. However, the background server does not know the information that these devices are in a group due to the limitation of functions. When a user respectively interacts with any two speakers via voice, the speakers are likely to give a wrong response because they cannot acquire the context information or the correct context information from the background server, which seriously affects user experience. For example, the user first interacts with a speaker A and requires to play a nursery rhyme; at this point, the speaker A acquires an audio stream from the background server of/in the cloud and forwards it to other speakers to realize synchronous playing. Although the other speakers can synchronously play it with the speaker A, it does not know the current playing context information of the speaker A. If the user asks a speaker B "What song is currently playing", the speaker B often cannot give a correct result.
3. It is required that all smart player devices are able to be coupled with the Internet. A networking mode of a front-end smart player device is limited. That is, each speaker is required to be coupled with the Internet, so as to establish data connection with the background server in one-to-one correspondence, which cannot flexibly form an internal network.

### SUMMARY

The disclosure provides a playing control method and apparatus for a device group, and a playing system, so as to at least partially solve the above problems.

The features of the method and apparatus according to the present disclosure are defined in the independent claims, and the preferable features according to the present invention are defined in the dependent claims.

For the problems of a great dependence on a device login account, a great dependence on server-side processing, and a single way of networking in using a server side to manage a speaker login account and group information to achieve the unity of context, in the disclosure, the master device is determined from multiple playing devices which form the device group, and other playing devices in the device group are determined as the slave devices. The user data collected by the slave devices may be transmitted to the master device, and the master device and the slave devices perform unified interaction without needing the server side to manage each playing device in the device group. That is, multiple playing devices of different accounts can flexibly form a device group, such that the overall response of the device group has a good consistency.

### BRIEF DESCRIPTION OF THE DRAWINGS

FIG. 1 is a flow chart showing a playing control method for a device group according to an embodiment of the disclosure.
FIG. 2 is a schematic diagram illustrating a network structure of a device group according to an embodiment of the disclosure.
FIG. 3 is a schematic diagram illustrating a network structure of another device group according to an embodiment of the disclosure.
FIG. 4 is a flow chart showing voice data transmission of a device group according to an embodiment of the disclosure.
FIG. 5 is a flow chart showing text data transmission of a device group according to an embodiment of the disclosure.
FIG. 6 is a structure diagram illustrating a playing control apparatus for a device group according to an embodiment of the disclosure.
FIG. 7 is a structure diagram illustrating a playing system according to an embodiment of the disclosure.

### DETAILED DESCRIPTION

Embodiments of the disclosure provide a playing control method for a device group. In a device group which is playing currently, a master device interacting with a background server side is determined. The master device is usually a master device which is playing a current sound source. The master device acquires data to be played from the server side and transmits/sends the data to other slave devices to realize synchronously playing. The other slave devices do not need to interact with the background server side, but transmit related data acquired from a user to the master device through a transmission channel of a local area network (LAN). The interaction between the master device and the background server side is carried out, and the response consistency of multiple devices is achieved through the transmission between front-end playing devices. The embodiments of the disclosure also provide corresponding devices and playing system, which are described in detail below.

In order to make the purpose, technical solutions and advantages of the disclosure clearer, implementation modes of the disclosure will further be described below in combination with the drawings in detail. However, it should be understood that the description are only exemplary and are not intended to limit the scope of the application. In addition, the description of the known structure and technology is omitted in the following statements, so as to avoid unnecessary confusion with the concept of the disclosure.

The terms used herein are only for describing specific embodiments, and not intended to limit the disclosure. The words "a", "an" and "the" used herein should also include the meaning of "multiple" and "a plurality of" unless otherwise definitely specified. In addition, the terms of "include" and "comprise" used herein indicate the presence of the described features, steps, operations and/or components, but do not exclude the presence or addition of one or more other features, steps, operations or components.

All terms used here (including technical and scientific terms) have meanings normally understood by those skilled in the art unless otherwise defined. It should be noted that the terms used here should be construed to have meanings consistent with the context of the specification and should not be interpreted in an idealized or overly rigid manner.

Some block diagrams and/or flow charts are shown in the accompanying drawings. It should be understood that some of the blocks in the block diagrams and/or flow charts or combinations thereof may be implemented by computer program instructions. These computer program instructions may be provided to a processor of a general-purpose computer, a special-purpose computer, or other programmable data processing devices, and when executed by the processor, they may create a device for implementing functions/operations described in these block diagrams and/or flow charts.

Therefore, the technology of the disclosure can be realized in the form of hardware and/or software (including firmware, microcode, and the like). In addition, the technology of the disclosure may take the form of a computer program product on a computer-readable storage medium where instructions are stored. The computer program product may be used by an instruction execution system or in combination with the instruction execution system. In the context of the disclosure, computer-readable storage media can be any medium that can contain, store, transmit, propagate, or transmit instructions. For example, the computer-readable storage media may include, but are not limited to, electrical, magnetic, optical, electromagnetic, infrared or semiconductor systems, apparatus, devices, or propagation media. Specific examples of computer-readable storage media include: a magnetic storage device such as a magnetic tape or a hard disk (HDD); an optical storage device such as a compact disc read-only memory (CD-ROM); a memory such as a random access memory (RAM) or a flash memory; and/or a wired/wireless communication link.

For the problems of a great dependence on a device login account, a great dependence on server-side processing, and a single way of networking in the existing intelligent speakers that achieve the context unity through the management of speaker login account and group information on a server side, the disclosure provides a playing control method for a device group, which does not depend on the server side to realize the context consistency of a formed device group of different accounts, and may realize different networking manners locally to achieve a lower delay effect. The method is illustrated by the following embodiments. In the following embodiments, taking an intelligent speaker as an example, the playing control method of a device group is illustrated. It should be understood that the device is not limited to the intelligent speaker, but may be any hardware device with group forming and media playing capabilities.

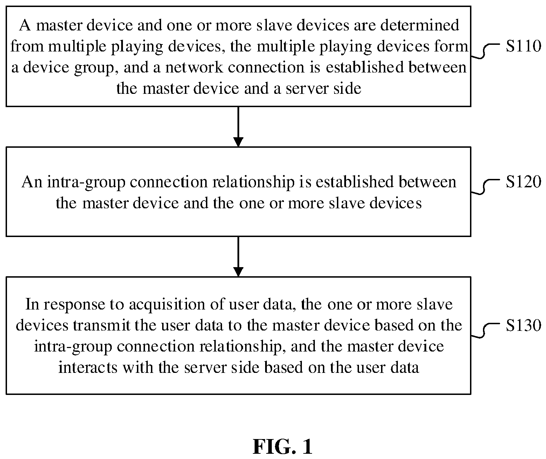

FIG. 1 is a flow chart showing a playing control method for a device group according to an embodiment of the disclosure. As illustrated in FIG. 1, the method in the embodiment may include the following operations.

At S110, a master device and one or more slave devices are determined from multiple playing devices, the multiple playing devices form a device group, and a network connection is established between the master device and a server side.

In the application, a playing device coupled with an audio source may be identified as the master device, or the master device is specified by a user, and other playing devices in the device group are identified as the slave devices.

At S120, an intra-group connection relationship is established between the master device and the one or more slave devices.

The master device is configured to manage the slave devices and control audio playing of the slave devices. The slave devices are configured to collect user data and transmit the user data to the master device, and the master device interacts with the server side uniformly.

The server side in the embodiments may include a background server and a cloud service platform.

At S130, in response to acquisition of user data, the one or more slave devices transmit the user data to the master device based on the intra-group connection relationship, and the master device interacts with the server side based on the user data.

When the master device acquires the user data, the master device transmits the acquired user data to the server side.

The user data includes at least one of: voice data, or text data converted from the voice data. In an embodiment, the slave device may transmit the acquired voice data directly to the master device without processing. In an embodiment, the slave device may acquire the text data corresponding to the voice data locally or through the cloud service platform in the cloud, and transmit the acquired text data to the master device. For example, speech to text (STT) conversion is performed to/on the voice data to obtain the corresponding text data. The master device interacts with the server side based on the voice data and/or the text data obtained from the slave devices.

For the problems of a great dependence on a device login account, a great dependence on server-side processing, and a single way of networking in using a server side to manage a speaker login account and group information to achieve the unity of context, in the disclosure, the master device is determined from multiple playing devices forming the device group, and other playing devices in the device group are determined as the slave devices. The user data collected by the slave devices may be transmitted to the master device, and the master device and the slave devices perform unified interaction without needing the server side to manage each playing device in the device group. That is, multiple playing devices of different accounts can easily form a device group, such that the overall response of the device group has a good consistency.

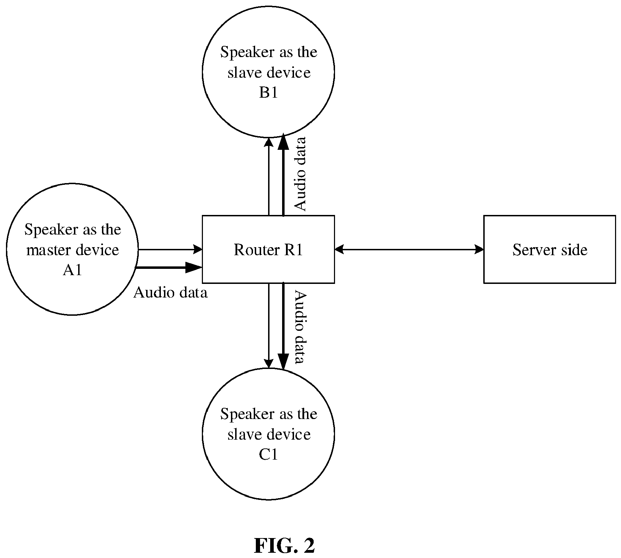

S110 to S130 are described in detail below in combination with FIG. 2 to FIG. 5.

First of all, S110 is performed, that is, the master device and one or more slave devices are determined from multiple playing devices, the multiple playing devices form the device group, and the network connection is established between the master device and the server side.

When establishing the device group, it may be established by logging into the same account, or by using different accounts. As long as each playing device in the device group is on the same LAN, the device group can be established.

The roles of the master device and the slave devices in the device group may change dynamically. Each time the device group is used, the master device and the slave devices may be determined first. For example, a device coupled with the server side via communications or a network is determined as the master device. In another embodiment, if more than one device is coupled with the server side via communications, the determined device coupled with the server side in the best communication condition (for example, transmission speed, transmission latency, and the like) may be determined as the master device. In another embodiment, a device that is first woken up by the user AI or that is already playing may also be taken as the master device. These are not limited in the disclosure here.

In the embodiments, requirements for the slave devices are flexible, and the slave devices may even be different types of products, such as a simple device with only a microphone, or an intelligent speaker device.

After the master device and the slave devices in the device group are determined, S120 is performed sequentially, that is, the intra-group connection relationship between the master device and the one or more slave devices is established.

Generally, the master device establishes a connection relationship with the server side through a routing device (for example, a router/switch). According to the embodiments of the disclosure, the intra-group connection relationship between the master device and the one or more slave devices may be established in at least one of the following two manners.

In the first manner, the one or more slave devices are coupled with the routing device respectively, and the intra-group connection relationship with the master device is established through the routing device.

As illustrated in FIG. 2, the device group includes three playing devices, including a speaker A1, a speaker B1 and a speaker C1. The speaker A1 is the master device. Both the speaker B1 and the speaker C1 are the slave devices. The routing device (the routing device in FIG. 2 is specifically a router R1) is coupled with the Internet. The speaker A1 as the master device is coupled with the server side through the router R1, while the speaker B1 and the speaker C1 as the slave devices are coupled with the speaker A1 in the intra-group mode through the router R1.

In the second manner, the one or more slave devices directly establish the intra-group connection relationship with the master device in a wireless connection mode respectively.

The manner of establishing the intra-group connection relationship in the second manner may include the following steps: first, a soft access point (also called SoftAP) of the master device is activated to make the master device enter a soft routing mode; and a wireless connection is established between the one or more slave devices and the master device through the soft routing mode of the master device. That is, the master device is wirelessly coupled with the routing device to establish the connection relationship with the server side; the SoftAP of the master device is activated in the case that the master device is coupled with the routing device, and the slave devices are coupled with the SoftAP to establish a direct wireless connection with the master device.

In an example, the SoftAP is activated through an application program of the SoftAP or a physical button for activating the SoftAP, such that the SoftAP of the master device sends a wireless connection signal including a preset identifier to the one or more slave devices; and the one or more slave devices establish a wireless connection relationship with the master device by responding to the wireless connection signal including the preset identifier.

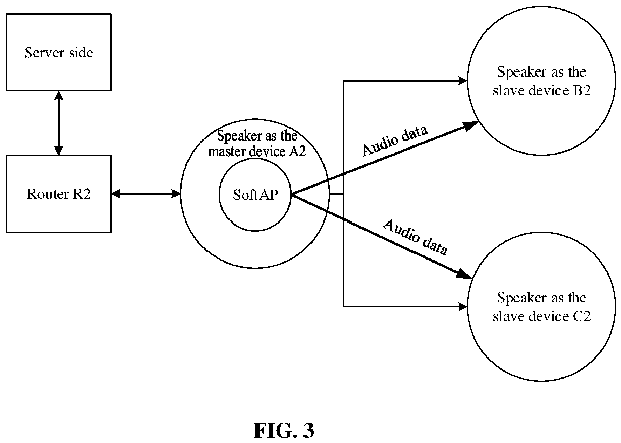

A network structure of the device group in the embodiment is illustrated in FIG. 3. A speaker A2 as the master device activates a SoftAP while coupling with the routing device (the routing device in FIG. 3 is specifically a router R2), a speaker B2 and a speaker C2 as the slave devices are coupled with the SoftAP, and audio data may be sent, directly through the SoftAP, from the speaker A as the master device to the speaker B2 and speaker C2 as the slave devices for synchronous playing. The process of forming the group may include that: first, the SoftAP is activated through software or by clicking a physical button on the speaker A2 as the master device, and a special identifier IE is added to a Beacon packet and a Probe Response packet broadcast by wifi; then, the speaker B2 and the speaker C2 as the slave devices may be coupled with the SoftAP either directly or by reminding the user to confirm when scanning the identifier IE.

Compared with the first manner, by constructing the network structure illustrated in FIG. 3 through the second manner, a transmission delay of audio data during playing in multiple rooms may be reduced. In FIG. 3, the audio data is forwarded to other speakers as the slave devices directly through the speaker A as the master device. Compared with the network structure illustrated in FIG. 2, in the network structure illustrated in FIG. 2, since all the speakers are coupled with the router, forwarding of audio data by the router will be added, thereby resulting in an increase in audio delay. An intra-group connection mode in FIG. 3 can effectively reduce the transmission delay, which is very beneficial in the case of simultaneous playing of multiple devices.

After the connection relationship between the master device and the slave devices is established, S130 is continued, that is, when the one or more slave devices acquire user data, the user data is transmitted to the master device based on the intra-group connection mode, and the master device interacts with the server side based on the user data.

The process that the master device interacts with the server side includes that: the master device transmits the user data to the server side, and receives a returned result sent by the server side; the master device analyzes, according to the returned result, whether whole group playing is required (for example, when playing a song, the user wants all the slave speakers and the master speaker to synchronously play the song) or single device playing is required (for example, when inquiring about the weather, only one speaker may play the answer, while the other speakers still keep the state of playing the song); when it is determined that the whole group playing is required, a control instruction and response data included in the returned result may be sent to each slave device for the whole group playing, and the control instruction is configured to instruct the slave device to play the response data; when it is determined that the single device playing is required, the control instruction and the response data included in the returned result is sent to a target playing device for the single device playing.

The data transmission processes of the device groups under different network structures in the embodiment are illustrated below through two specific embodiments.

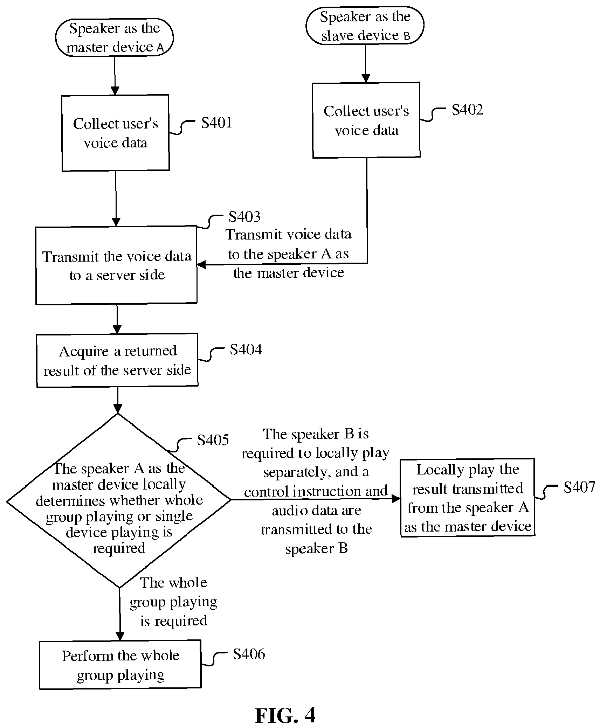

In the first specific embodiment, the connection relationship between the master device and the slave devices may refer to FIG. 2 or FIG. 3, a device group consisting of the speaker A1/A2 (hereinafter referred to as a speaker A), the speaker B1/B2 (hereinafter referred to as a speaker B) and the speaker C1/C2 (hereinafter referred to as a speaker C) is formed. The speaker A coupled with the audio source is determined as the master device, and the speaker B and the speaker C are determined as the slave devices. In the network structures illustrated in FIG. 2 or FIG. 3, a data transmission process in the device group is illustrated in FIG. 4.

First, user's voice data is collected.

When a user interacts with the speaker A, for example, the user says "Please play XX music" to the speaker A, S401 is performed. When the user interacts with the speaker B or the speaker C, for example, the user turns to the speaker B and says "What music is playing now?" to the speaker B, S402 is performed.

At S401, the speaker A collects the user's voice data, and then S403 is performed, that is, the speaker A acts as the master device to directly respond to voice interaction this time.

At S402, the speaker B collects the user's voice data, and then the speaker B as the slave device transmits the collected voice data to the speaker A as the master device.

According to an embodiment of the disclosure, after receiving the user's voice data, the speaker B as the slave device does not interact with a server side, but sends the voice data to the speaker A as the master device for processing. According to another embodiment of the disclosure, it is easy to understand that, in order to reduce the bandwidth occupied by transmitting the voice data between the speakers, the speaker B converts the collected voice data into text data through the STT conversion process locally or through its network connection with the cloud, and sends the converted text data to the speaker A as the master device.

At S403, the speaker A as the master device transmits the acquired voice data or text data to a server side.

According to an embodiment of the disclosure, if the voice data is received by the master device, then the speaker A as the master device sends the acquired voice data to the server side. The server side performs the STT conversion according to the received voice data to obtain the text data, performs semantic analysis on the obtained text data, determines a user request according to the semantic analysis, and generates response data corresponding to the user request, and sends it to the speaker A as the master device. The speaker as the master device may also convert the acquired voice data into the text data, and send the converted text data to the server side to reduce network resources occupied by transmitting the voice data.

According to an embodiment of the disclosure, if the master device receives the text data sent from the speaker, it can directly interact with the server side based on the text data, which will not be repeated here.

At S404, the speaker A as the master device acquires a returned result of the server side.

The returned result of the server side may be audio data, for example, a music audio stream for a playing request, or voice audio data in response to user queries. The returned result of the server side may also be the text data, for example, the text data in response to user queries.

At S405, the speaker A as the master device determines, according to the returned result of the server side, whether whole group playing or single device playing is required; when it is determined that the whole group playing is required, S406 is performed; when it is determined that the single device playing is required, S407 is performed.

The returned result of the server side includes a playing identifier that is configured to indicate whether the returned result is the whole group playing or the single device playing. For example, when the returned result includes the playing identifier corresponding to the whole group playing, the speaker A as the master device determines that the returned result needs the whole group playing; when the returned result includes the playing identifier corresponding to the single device playing, the speaker A as the master device determines that the returned result needs the single device playing. The playing identifier corresponding to the single device playing indicates that a target playing device in the device group (at this point, the target playing device is the speaker B as the slave device) will play the returned result to perform the single device playing. It should be understood that the speaker A as the master device may also determine the target playing device in the current device group (the master device knows information of the slave device that communicates with it before), and information related to the target playing device is not included in the playing identifier corresponding to the single device playing.

At S406, the whole group playing is performed.

When the speaker A as the master device receives audio stream data, multiple devices in the whole group may play music together based on the existing method of synchronously playing on the devices of an audio group. When the data transmitted by the speaker A as the master device is the text data, the speaker in the device group may convert the text data into the audio data for playing. For example, the text data may be converted to the audio data by using a text to speech (TTS) technology.

At S407, a specified single device locally plays audio data transmitted from the speaker A as the master device.

Similarly, when a single device plays, if the received data is the text data, the text data may be converted to the audio data for local playing by using the TTS technology.

Exemplarily, when the speaker A as the master device acquires the voice data "Please play XX music" collected by itself, the returned result of the server side includes the music audio stream to be played, and the returned result includes the playing identifier corresponding to the whole group playing. The speaker A as the master device analyzes the returned result received and determines that the returned result needs the whole group playing. At this point, the music audio data and the control instruction are sent to each slave device. Based on the control instruction, the synchronous playing of all the speakers is realized.

When the speaker A as the master device acquires the voice data "what music is playing now?" collected by the speaker B, the returned result of the service side includes reply audio data of/for the query, and the returned result may or may not include the playing identifier corresponding to the single device playing indicating that the speaker B is the target device. The speaker A as the master device analyzes the returned result, and determines that the returned result needs the single device playing; at this point, the speaker A sends the reply audio data and the control instruction to the speaker B as the slave device; and then the speaker B as the slave device plays the reply audio data according to the control instruction.

Thus, the interaction between the user and the device group is realized according to S401 to S407 in FIG. 4.

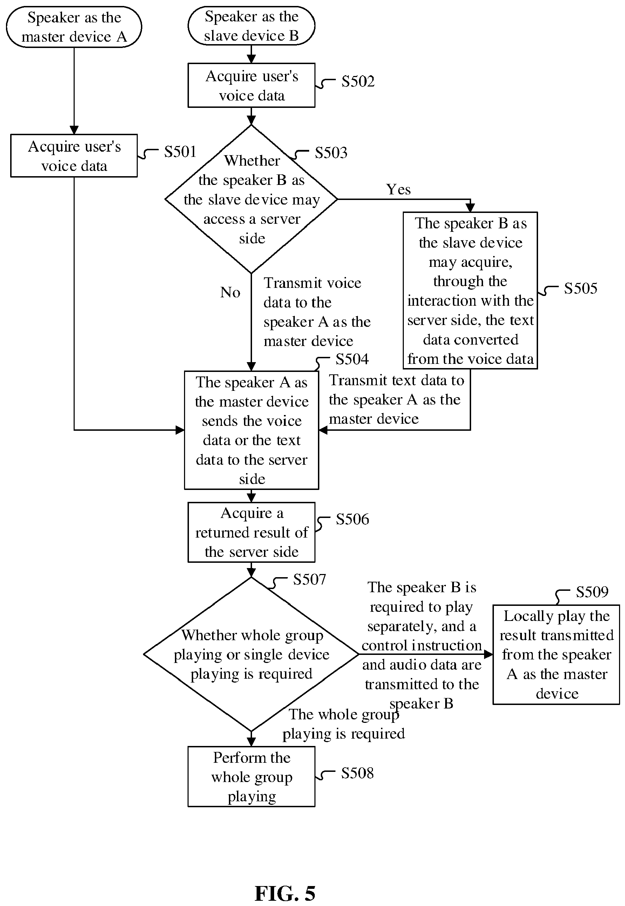

In the second specific embodiment, the connection relationship between the master device and the slave devices may refer to FIG. 2 or FIG. 3, a device group consisting of the speaker A1/A2 (hereinafter referred to as a speaker A), the speaker B1/B2 (hereinafter referred to as a speaker B) and the speaker C1/C2 (hereinafter referred to as a speaker C) is formed. The speaker A coupled with a server side is determined as the master device, and the speaker B and the speaker C are determined as the slave devices. In the network structures illustrated in FIG. 2 or FIG. 3, a data transmission process in the device group is illustrated in FIG. 5.

First, user's voice data is collected.

When a user interacts with the speaker A, for example, the user is near the speaker A and says " Little bird, little bird, please play XX music" to the speaker A, S501 is performed. When the user interacts with the speaker B or the speaker C, for example, the user turns to the speaker B and says " Little bird, little bird, please play XX music", S502 is performed.

At S501, the speaker A collects the user's voice data, and S505 is performed, that is, the speaker A acts as the master device to directly respond to voice interaction this time.

At S502, the speaker B collects the user's voice data.

At S503, after acquiring the user's voice data, the speaker B as the slave device determines whether it may access the server side (namely it determines whether a network connection is configured with the server side); when the speaker B cannot access the server side, it sends the voice data to the speaker A as the master device, and S505 is performed; when it can access the server side, S504 is performed.

At S504, the speaker B as the slave device sends the voice data to the server side, and the server side performs on-line STT conversion to the voice data; then, text data converted by the server side is acquired and sent to the speaker A as the master device.

According to an example, the connection mode as illustrated in FIG. 2 is applied to the speaker group; at this point, the speaker B1 is coupled with the router R1, such that the speaker B1 may access the server side through the router R1; when receiving the voice data, the speaker B1 may send the voice data to the server side, and the server side performs the STT conversion, thus improving the transmission efficiency in subsequent steps.

That is, when the speaker as the slave device may access the server side, the speaker as the slave device can perform data type conversion with the server side, while both semantic recognition and request response are completed through the interaction between the master device and the server side, thus making the context of the whole device group consistent.

At S505, the speaker A as the master device transmits the acquired voice data or text data to the server side.

When the data obtained by the speaker A as the master device is the text data, the server side performs semantic analysis on the text data, determines a user request according to the semantic analysis, and generates response data corresponding to the user request and sends it to the speaker A as the master device.

When the data acquired by the speaker A as the master device is the voice data, the server side performs the STT conversion according to the received voice data to obtain text data, performs semantic analysis on the obtained text data, determines a user request according to the semantic analysis, and generates response data corresponding to the user request and sends it to the speaker A as the master device.

It is to be understood that the speaker A as the master device may also locally convert the acquired voice data of the speaker as the slave device into the text data, and send the converted text data to the server side to reduce the network resources occupied by transmitting the data.

At S506, the speaker A as the master device acquires a returned result of the server side.

The returned result of the server side may be audio data, for example, a music audio stream for a playing request, or voice audio data in response to user queries. The returned result of the server side may also be the text data, for example, the text data in response to the user queries.

At S507, the speaker A as the master device determines, according to the returned result of the server side, whether whole group playing or single device playing is required; when it is determined that the whole group playing is required, S508 is performed; when it is determined that the single device playing is required, S509 is performed.

At S508, the whole group playing is performed.

At S509, a specified single device locally plays audio data transmitted from the speaker A as the master device.

The method that the master device speaker A determines whether the whole group playing or the single device playing is required may refer to the determining process of the speaker A as the master device in FIG. 4, which will not be repeated here.

Thus, the interaction between the user and the device group may be realized according to S501 to S509 in FIG. 5.

The disclosure also provides a playing control apparatus for a device group.

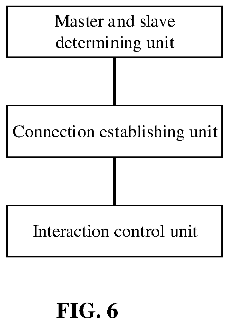

FIG. 6 is a structure diagram illustrating a playing control apparatus for a device group according to an embodiment of the disclosure. As illustrated in FIG. 6, the device in the embodiment may include: a master and slave determining unit, a connection establishing unit, and an interaction control unit.

The master and slave determining unit is configured to determine a master device and one or more slave devices from multiple playing devices, the multiple playing devices form a device group, and a network connection is established between the master device and a server side.

The connection establishing unit is configured to establish an intra-group connection relationship between the master device and the one or more slave devices.

The interaction control unit is configured to transmit, in response to acquisition of user data, the user data to the master device based on the intra-group connection relationship through the one or more slave devices, and interact with the server side through the master device based on the user data.

In some embodiments, the interaction control unit is applied to the master device and configured to: transmit the user data to the server side, and receive a returned result sent by the server side; analyze, according to the returned result, whether whole group playing or single device playing is required; send, in response to determining that the whole group playing is required, a control instruction and response data included in the returned result to each slave device for the whole group playing, the control instruction being configured to instruct the slave device to play the response data; send, when it is determined that the single device playing is required, the control instruction and the response data included in the returned result to a target playing device for the single device playing.

In some embodiments, the connection establishing unit is configured to establish the network connection between the master device and the server side through a routing device. The connection establishing unit is further configured to: couple the one or more slave devices with the routing device respectively, and establish the intra-group connection relationship between the master device and the one or more slave devices through the routing device; or, directly couple the one or more slave devices with the master device in a wireless connection mode respectively.

In an example, the connection establishing unit is further configured to: activate a soft access point of the master device to make the master device enter a soft routing mode; and establish a wireless connection between the one or more slave devices and the master device through the soft access point.

The device embodiments substantially correspond to the method embodiments, and thus related parts refer to part of descriptions of the method embodiments. The embodiments of the device described above are only schematic. The units described as separate parts may be or may not be separate physically. The part shown as the unit may be or may not be a physical unit, that is to say, it may be in a place or distributed on multiple network units. It is possible to select, according to the actual needs, part or all of the modules to achieve the objective of the solutions in the disclosure. Those of ordinary skill in the art may understand and implement without creative work.

The disclosure also provides a playing system.

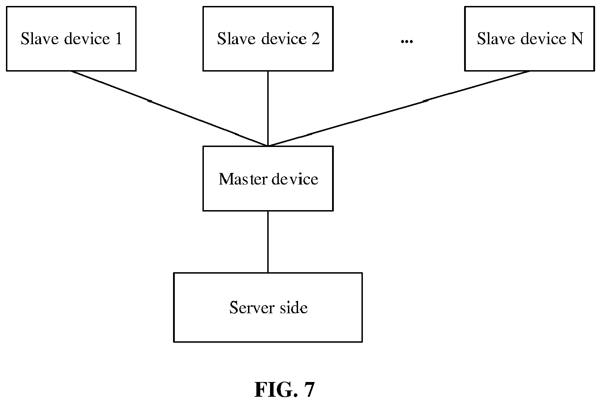

FIG. 7 is a structure diagram illustrating a playing system according to an embodiment of the disclosure. As illustrated in FIG. 7, the playing system in the embodiment includes: a master device, one or more slave devices and a server side. A network connection is established between the master device and the server side. The master device and the one or more slave devices form a group and establish an intra-group connection relationship.

The one or more slave devices are configured to transmit acquired user data to the master device based on the intra-group connection relationship.

The master device is configured to interact with the server side based on the user data.

In some embodiments, the master device transmits the user data to the server side, and receives a returned result sent by the server side; the master device analyzes, according to the returned result, whether whole group playing or single device playing is required; when it is determined that the whole group playing is required, the master device sends a control instruction and response data included in the returned result to each slave device for the whole group playing, the control instruction being configured to instruct the slave device to play the response data; and when it is determined that the single device playing is required, the master device sends the control instruction and the response data included in the returned result to a target playing device for the single device playing.

Correspondingly, the server side is configured to generate the returned result according to the user data, and send the returned result to the master device.

In some embodiment, the master device establishes a connection relationship with the server side through a routing device.

The one or more slave devices are coupled with the routing device respectively, and the intra-group connection relationship is established with the master device through the routing device; or, the one or more slave devices are directly coupled with the master device in a wireless connection mode respectively.

The above are only specific implementation modes of the disclosure. Under the above teaching of the disclosure, those skilled in the art may make other improvements or modifications based on the above embodiments. Those skilled in the art should understand that the above detailed description is only for better explaining the purpose of the disclosure, and the protection scope of the disclosure should be subject to the protection scope of the claims.

## Claims

1. A playing control method for a device group, **characterized in that** the method comprises:
determining (S110) a master device and one or more slave devices from multiple playing devices, wherein the multiple playing devices form a device group, and a network connection is established between the master device and a server side;
establishing (S120) an intra-group connection relationship between the master device and the one or more slave devices; and
in response to acquisition of user data, transmitting (S 130), by the one or more slave devices, the user data to the master device based on the intra-group connection relationship, and interacting with the server side through the master device based on the user data.

2. The method of claim 1, wherein interacting with the server side based on the user data by the master device comprises:
transmitting, by the master device, the user data to the server side, and receiving a returned result sent by the server side;
analyzing according to the returned result, by the master device, whether whole group playing or single device playing is required;
sending, in response to determining that the whole group playing is required, a control instruction and response data included in the returned result to each slave device for the whole group playing, wherein the control instruction is configured to instruct the slave device to play the response data; and
sending, in response to determining that the single device playing is required, the control instruction and the response data included in the returned result to a target playing device for the single device playing.

3. The method of claim 1, wherein in response to acquisition of the user data, transmitting, by the master device, the acquired user data to the server side.

4. The method of claim 1, wherein the network connection between the master device and the server side is established by:
establishing, by the master device, a connection relationship with the server side through a routing device.

5. The method of claim 4, wherein establishing the intra-group connection relationship between the master device and the one or more slave devices comprises:
coupling the one or more slave devices with the routing device respectively, and establishing the intra-group connection relationship with the master device through the routing device; or
directly coupling the one or more slave devices with the master device in a wireless connection mode respectively.

6. The method of claim 5, wherein directly coupling the one or more slave devices with the master device in the wireless connection mode respectively comprises:
activating a soft access point of the master device; and
establishing a wireless connection between the one or more slave devices and the master device through the soft access point.

7. The method of claim 6, wherein establishing the wireless connection between the one or more slave devices and the master device through the soft access point comprises:
sending, by the master device, a wireless connection signal comprising a preset identifier to the one or more slave devices; and
establishing, by the one or more slave devices, a wireless connection relationship with the master device by responding to the wireless connection signal comprising the preset identifier.

8. The method of claim 1, wherein the user data comprises at least one of: voice data, or text data converted from the voice data.

9. A playing control apparatus for a device group, **characterized in that** the apparatus comprises:
a master and slave determining unit, configured to determine a master device and one or more slave devices from multiple playing devices, wherein the multiple playing devices form a device group, and a network connection is established between the master device and a server side;
a connection establishing unit, configured to establish an intra-group connection relationship between the master device and the one or more slave devices; and
an interaction control unit, configured to transmit, in response to acquisition of user data, the user data to the master device based on the intra-group connection relationship through the one or more slave devices, and interact with the server side through the master device based on the user data.

10. The apparatus of claim 9, wherein the interaction control unit is further configured to:
transmit the user data to the server side, and receive a returned result sent by the server side;
analyze according to the returned result whether whole group playing or single device playing is required;
send, in response to determining that the whole group playing is required, a control instruction and response data included in the returned result to each slave device for the whole group playing, wherein the control instruction is configured to instruct the slave device to play the response data; and
send, in response to determining that the single device playing is required, the control instruction and the response data included in the returned result to a target playing device for the single device playing.

11. The apparatus of claim 9, wherein the interaction control unit is further configured to transmit, in response to acquisition of the user data, the acquired user data to the server side.

12. The apparatus of claim 9, wherein the connection establishing unit is further configured to establish a connection relationship with the server side through a routing device.

13. The apparatus of claim 12, wherein the connection establishing unit is further configured to:
couple the one or more slave devices with the routing device respectively, and establish the intra-group connection relationship with the master device through the routing device; or
directly couple the one or more slave devices with the master device in a wireless connection mode respectively.

14. The apparatus of claim 13, wherein the connection establishing unit is further configured to:
activate a soft access point of the master device; and
establish a wireless connection between the one or more slave devices and the master device through the soft access point.

15. A playing system, **characterized in that** the system comprises: a master device, one or more slave devices and a server side; wherein a network connection is established between the master device and the server side; the master device and the one or more slave devices form a group and establish an intra-group connection relationship;
the one or more slave devices are configured to transmit acquired user data to the master device based on the intra-group connection relationship; and
the master device is configured to interact with the server side based on the user data.
